# FASCICULE DE BREVET EUROPEEN

(11) **EP 4 595 037 B1**
(45) Date de publication et mention de la délivrance du brevet: **06.05.2026**
(21) Numéro de dépôt: 23762539.7
(22) Date de dépôt: 05.09.2023
(51) Int. Cl.: G05D 1/247, G05D 1/46, G05D 1/654, G05D 109/25, G05D 111/30, G08G 5/21, G08G 5/26, G08G 5/54, G08G 5/55, G01S 1/08, G01S 13/91, G01S 3/02, H04K 3/00, G08G 5/57

(54) **PROCEDE D'ASSISTANCE A L'ATTERRISSAGE D'UN AERONEF**
VERFAHREN ZUR LANDEUNTERSTÜTZUNG EINES LUFTFAHRZEUGS
METHOD FOR ASSISTING IN THE LANDING OF AN AIRCRAFT

(30) Priorité: 27.09.2022 FR 2209808
(43) Date de publication de la demande: 06.08.2025
(73) Titulaire: Safran Electronics & Defense, 75015 Paris (FR)
(72) Inventeur: CHIODINI, Alain, 77550 Moissy-Cramayel (FR); TODESCHINI, Eric, 77550 Moissy-Cramayel (FR)
(74) Mandataire: Cabinet Boettcher
(86) Numéro de dépôt international: PCT/EP2023/074337
(87) Numéro de publication internationale: WO 2024/068199

(56) Documents cités:
- US-A1- 2012 032 854
- US-A1- 2013 002 473
- US-A1- 2022 015 102
- US-A1- 2022 198 947

## Description

La présente invention concerne le domaine de l'assistance à l'atterrissage d'un aéronef.

### ARRIERE PLAN DE L'INVENTION

Pour assister des aéronefs à atterrir sur une zone précise, en particulier les aéronefs à décollage et atterrissage vertical, il est usuellement connu d'avoir recours à un système de GPS différentiel.

Un tel système comporte un réseau de satellites ainsi qu'un réseau de stations fixes de référence, le système transmettant à son récepteur principal l'écart entre des positions supposées des stations fixes indiquées par les satellites et les positions réelles connues de ces mêmes stations.

A cet effet il est connu de se baser sur des mesures « heure d'arrivée » (plus connu sous l'acronyme anglais « Time Of Arrival » ou TOA) de signaux échangés au sein du système, directement liés à la distance entre les différents éléments du système, et de comparer ces signaux via des processus dits « processus différence d'heure d'arrivée » (pour processus « Time Difference Of Arrival » ou processus TDOA). Une autre alternative est de se baser sur des mesures « direction d'arrivée » des signaux échangés au sein du système (plus connu sous l'acronyme anglais « Direction of Arrival » ou DOA), directement liées à l'angularisation entre les différents éléments du système, via des processus dits « processus DOA ».

Dans tous les cas, les estimations basées sur des processus TDOA ou des processus DOA présentent des biais qui peuvent devenir importants en cas de brouillage des signaux échangés, brouillages accidentels ou intentionnels, ce qui nuit à la qualité de l'assistance à l'atterrissage de l'aéronef.

Les documents pertinents de l'état de la technique sont fournis par US 2022/198947 A1 qui décrit un hélicoptère sans pilote pouvant atterrir automatiquement sur une piste d'atterrissage et de décollage à l'aide de dispositifs de positionnement local.

US 2013/002473 A1 décrit une assistance au pilote pour guider un hélicoptère vers un atterrissage sûr en utilisant un réseau phasé interne et un retard d'arrivée. US 2022/015102 A1 décrit une station aéronef dans un système LDACS réalisant un pseudo-mesurage de distance à l'aide d'une différence de temps d'arrivée et d'un angle d'arrivée.

US 2012/032854 A1 décrit un réseau de capteurs à large zone utilisant la direction d'arrivée, la différence de temps d'arrivée et la géolocalisation hybride pour la géolocalisation d'une source radiofréquence.

### OBJET DE L'INVENTION

L'invention a notamment pour but de proposer un procédé d'assistance à l'atterrissage d'un aéronef qui soit plus performant que les procédés existants.

### RESUME DE L'INVENTION

A cet effet, on prévoit, selon l'invention un procédé d'assistance à l'atterrissage d'un aéronef comportant un système bord, sur une zone d'atterrissage associée à un système sol, le système sol comprenant plusieurs sous-modules de communication comprenant chacun une antenne, le système bord et le système sol étant aptes à communiquer ensemble.

Selon l'invention le procédé comporte les étapes de :
- Lors d'une première phase d'atterrissage, synchroniser le système bord et le système sol en échangeant au moins une information d'horodatage entre le système sol et le système bord,
- Lors d'une deuxième phase d'atterrissage, postérieure à la première phase d'atterrissage :
   - premier point : Estimer au niveau de chaque sous-module au moins une information caractéristique de la distance séparant l'aéronef du sous-module concerné, et combiner lesdites informations pour en déduire au moins une information caractéristique de la direction générale brute d'arrivée de l'aéronef vis-à-vis d'un point donné de la zone d'atterrissage,
   - deuxième point : Estimer au moins une information caractéristique de la direction d'un signal émis par l'aéronef vis-à-vis du système sol,
   - troisième point : Comparer l'information caractéristique de la direction générale brute d'arrivée de l'aéronef établie au premier point avec au moins l'information caractéristique de la direction du deuxième point, et déterminer au moins une information caractéristique de la direction générale affinée d'arrivée de l'aéronef vis-à-vis du point donné de la zone d'atterrissage,
      quatrième point : Guider l'aéronef à partir de ladite information caractéristique de la direction générale affinée d'arrivée de l'aéronef vis-à-vis du point donné de la zone d'atterrissage.

Ainsi, la localisation de l'aéronef est fondée sur l'utilisation conjointe de la détection d'au moins une distance et d'au moins un angle d'arrivée de l'aéronef vis-à-vis du point donné de la zone d'atterrissage, avec une synchronisation temporelle système bord/ système sol. Les inventeurs ont pu constater que cela permettait d'obtenir une très bonne localisation de l'aéronef. L'assistance à l'atterrissage de l'aéronef s'en trouve simplifiée. L'invention permet en effet une très bonne localisation de l'aéronef vis-à-vis de la zone d'atterrissage dans le temps et dans l'espace (en trois dimensions). Les inventeurs ont ainsi pu constater qu'il était possible d'avoir une précision sub-métrique sur la position de l'aéronef dans l'espace. Les inventeurs ont également pu constater qu'il était possible d'obtenir une synchronisation temporelle système bord / système sol précise à moins de 10 nanosecondes. L'invention s'avère particulièrement intéressant dans le cas d'un atterrissage en milieu urbain où les signaux de brouillage et les signaux multi-trajets sont nombreux. Optionnellement, l'information d'horodatage est celle d'une horloge de référence.

Optionnellement, l'horloge de référence est une horloge atomique.

Optionnellement, l'horloge atomique est couplée à au moins un récepteur d'un système de positionnement par satellites.

Optionnellement l'étape de synchronisation est mise en œuvre par l'intermédiaire d'un « Protocole de Temps de Précision ».

Optionnellement, le système bord et le système sol sont configurés pour échanger des données via une liaison radio qui est compatible d'un protocole internet.

Optionnellement le protocole internet est un « protocole de diagramme utilisateur ».

Optionnellement, la liaison est une liaison C2.

Optionnellement le point donné de la zone d'atterrissage est le centre de la zone d'atterrissage.

Optionnellement l'information caractéristique de la distance séparant l'aéronef de chacune des sous-modules est une pseudo-distance.

Optionnellement la pseudo-distance est déterminée par un processus « différence d'heure d'arrivée ».

Optionnellement, au premier point on combine les informations par multilatération.

Optionnellement au deuxième point l'information caractéristique de la direction d'un signal émis par l'aéronef est une « direction d'arrivée ».

Optionnellement dans lequel au troisième point on s'appuie sur la direction générale brute d'arrivée de l'aéronef pour différencier une direction d'un signal émis par l'aéronef de directions de signaux émis par ou des brouilleurs.

Optionnellement on rejecte les brouilleurs par un anti-brouillage.

Optionnellement l'anti-brouillage est un anti-brouillage à Antenne à diagramme de rayonnement contrôlé.

Optionnellement, le procédé comprend au moins une étape de filtrage de l'information caractéristique de la direction d'un signal émis par l'aéronef vis-à-vis du système sol et/ou une étape de filtrage de la direction générale affinée d'arrivée de l'aéronef vis-à-vis du point donné de la zone d'atterrissage.

Optionnellement le système sol comporte quatre antennes.

Optionnellement la distance séparant deux antennes du système sol est supérieure à la moitié de la longueur d'onde de rayonnement de l'une des deux dites antennes.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] la figure 1 illustre schématiquement une partie de l'installation selon une mise en œuvre particulière de l'invention ;
[Fig. 2] la figure 2 illustre schématiquement un système bord de l'installation représentée à la figure 1 ;
[Fig. 3] la figure 3 illustre schématiquement un système sol de l'installation représentée à la figure 1 ;
[Fig. 4] la figure 4 illustre schématiquement les différentes phases d'atterrissage d'un aéronef sur une zone d'atterrissage de l'installation représentée à la figure 1 ;
[Fig. 5] la figure 5 est un schéma symbolisant différentes étapes pouvant être mises en œuvre dans l'installation représentée à la figure 1 ;
[Fig. 6] la figure 6 représente schématiquement un algorithme mis en place dans un système sol de l'installation représentée à la figure 1 ;
[Fig. 7] la figure 7 représente schématiquement un chronogramme d'un signal pouvant être échangé entre le système bord et le système sol de l'installation représentée à la figure 1.

### DESCRIPTION DETAILLEE DE L'INVENTION

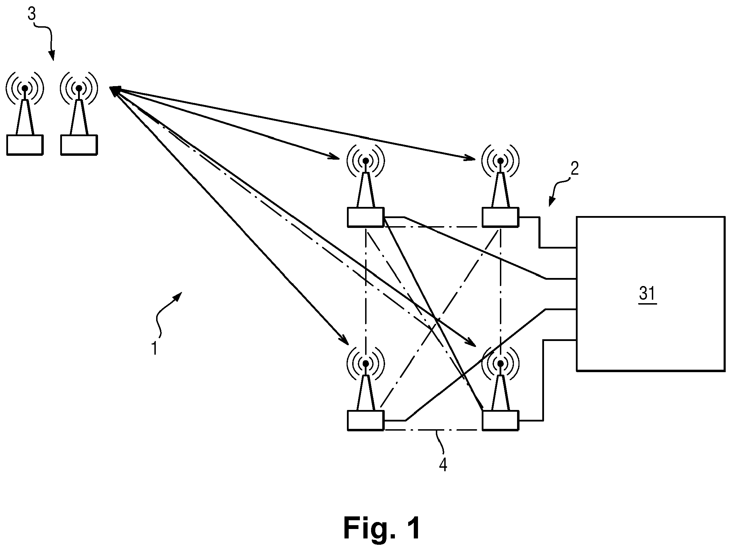

La figure 1 représente une installation 1 comprenant un système sol 2 et un système bord 3 qui est intégré à un aéronef. L'installation 1 est ainsi configurée pour assister un aéronef lors de son atterrissage sur une zone d'atterrissage 4 donnée associée au système bord 3. Par exemple une partie du système sol 2 est sur la zone d'atterrissage 4 et une autre à proximité immédiate de la zone d'atterrissage 4.

L'aéronef peut être avec pilote ou sans pilote. L'aéronef est par exemple un aéronef à décollage et atterrissage vertical (ou aéronef ADAV également connu sous le terme anglais VTOL pour « Vertical Take Off Landing ») ou en variante un aéronef qui n'est pas un aéronef ADAV. L'atterrissage peut être automatique ou non.

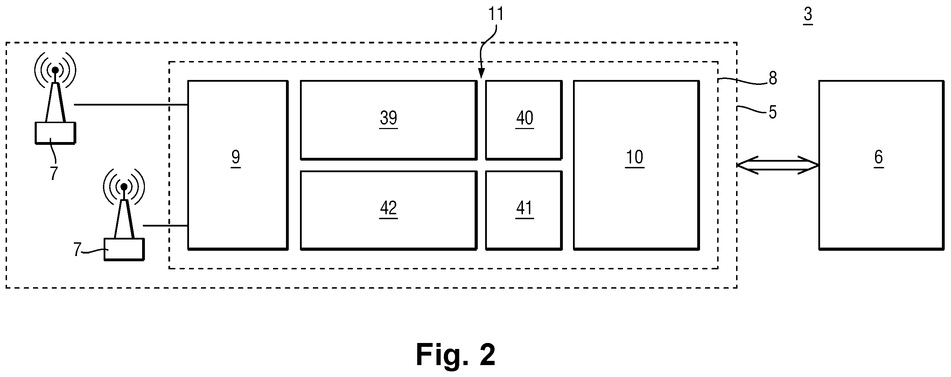

Le système bord 3 va être à présent décrit en référence à la figure 2.

Le système bord 3 comporte un module de communication bord 5 interconnecté avec un organe de calcul bord 6, tel que par exemple un calculateur, l'organe de calcul bord 6 faisant ou non partie du système bord 3. Le calculateur joue par exemple le rôle d'un autopilote. Le module de communication bord 5 et l'organe de calcul bord 6 sont connectés entre eux par exemple via un réseau Ethernet.

Le module de communication bord 5 comporte également au moins une antenne 7 associée à au moins un émetteur-récepteur 8 de liaison bord. L'antenne 7 est par exemple une antenne dipolaire.

Dans le cas présent, le module de communication bord 5 comporte deux antennes associées toutes les deux à l'émetteur-récepteur 8 de liaison bord. Les antennes 7 sont par exemple des antennes dipolaires.

Ledit émetteur-récepteur 8 comprend ainsi au moins une interface de communication 9 avec les antennes 7, ladite interface de communication 9 comprenant un circuit frontal de radio-fréquence (plus connu sous le terme anglais de « Front End RF »). L'aéronef est ainsi équipé d'un module de communication bord 5 lui permettant d'émettre et de recevoir, par transmission radio via ses antennes 7, des signaux avec le système sol 2.

L'émetteur-récepteur 8 comporte également ici au moins une interface de communication 10 avec l'organe de calcul bord 6. L'interface de communication 10 est ici un modulateur/démodulateur ou Modem. C'est donc ici le Modem qui est en interconnexion Ethernet avec l'organe de calcul bord 6.

L'émetteur-récepteur 8 comporte en outre un appareil convertisseur 11 permettant de convertir les données échangées entre le système bord 3 et le système sol 2 (par liaison radio) en des données exploitables pour l'organe de calcul bord 6 (en liaison Ethernet avec le module de communication bord 5). Ledit appareil convertisseur 11 sera décrit plus bas.

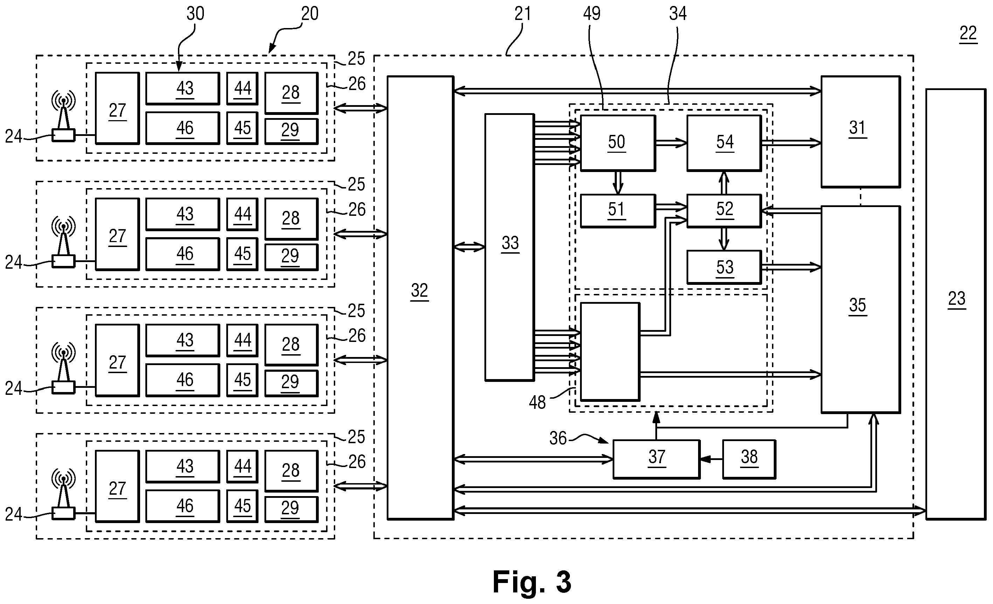

Le système sol 2 va être à présent décrit en référence à la figure 3.

Le système sol 2 comporte un module de communication sol 20 ainsi qu'un module d'assistance à l'atterrissage 21. Le module d'assistance à l'atterrissage 21 est en communication avec une station sol 22 centrale, incluant au moins un ordinateur central 23 et faisant ou non partie du système sol. Le module d'assistance à l'atterrissage 21 et la station sol 22 sont connectés entre eux par exemple via un réseau Ethernet et de préférence encore via un réseau Gigabit Ethernet. Le module d'assistance à l'atterrissage 21 et le module de communication sol 20 sont connectés entre eux par exemple via un réseau Ethernet et de préférence encore via un réseau Gigabit Ethernet.

La station sol 22 assure le contrôle et la commande de l'aéronef dans ses différentes phases de vol. La station sol 22 permet par exemple à un opérateur de paramétrer et/ou de configurer l'installation 1 et/ou d'intervenir en mode manuel sur l'installation 1 quelle que soit la phase de vol de l'aéronef. Alternativement ou en complément, la station sol 22 permet de gérer différents paramètres tels que la météo et/ou le trafic aérien et/ou le système de gestion du trafic aérien pour les systèmes non pilotées (plus connu sous le terme anglais de « Unmanned Aircraft System Traffic Management »)

Alternativement ou en complément, lors des phases d'atterrissage, la station sol 22 permet de contrôler le module d'assistance à l'atterrissage 21 et notamment des trajectoires à suivre et/ou des couloirs de vol à emprunter pour l'atterrissage de l'aéronef et/ou des plans de vol du véhicule, à suivre par l'aéronef lors des phases d'atterrissage et déterminées par le module d'assistance à l'atterrissage 21.

Le module de communication sol 20 comporte une pluralité d'antennes 24. Au moins l'une des antennes 24 est par exemple une antenne dipolaire.

Les antennes 24 sont ici agencées sur la zone d'atterrissage 4 de sorte à la délimiter.

Par exemple, le module de communication sol 20 comporte quatre antennes 24 disposées en carré comme par exemple, et de manière non limitative, en carré de 50 mètres de côté. Le carré définit ainsi la zone d'atterrissage 4 de l'aéronef étant entendu que l'on privilégiera de faire atterrir l'aéronef le plus proche possible du centre de ce carré.

Le recours à quatre antennes 24 permet avantageusement de disposer d'un système antennaire de type MIMO (Multiple-Input Multiple-Output ou Entrées multiples - Sorties multiples en français).

De préférence, les quatre antennes 24 sont agencées de sorte à former un réseau d'antennes macroscopique. Ceci signifie que la distance séparant une première antenne d'une deuxième antenne est nettement supérieure à la moitié de la longueur d'onde associée à la fréquence de résonnance de la première antenne.

Ceci permet de limiter un risque de couplage entre les différentes antennes 24.

Le module de communication sol 20 comporte ici un sous-module 25 de communication associé chacun à l'une des antennes 24 du module de communication sol, le sous-module 25 incluant l'antenne 24 considérée pouvant également être appelé « ancre radio ». Chaque ancre radio a ainsi une position connue (par le système sol 2) dans un repère cartésien rattaché à la zone d'atterrissage 4 puisque chaque ancre radio est fixe vis-à-vis de ladite zone d'atterrissage 4. Les sous-modules 25 sont de préférence tous identiques entre eux de sorte que la description qui suit de l'un des sous-modules 25 s'applique également aux trois autres sous-modules 25.

Le sous-module 25 comporte ainsi un émetteur-récepteur 26 de liaison sol associé à l'antenne 24 sol considérée.

Ledit émetteur-récepteur 26 comprend ainsi au moins une interface 27 de communication associée à l'antenne 24 sol considérée, ladite interface 27 comprenant un circuit frontal de radio-fréquence. *Le système sol* 2 *est ainsi équipé d'un module de communication 20 lui permettant d'émettre et de recevoir, par transmission radio via ses antennes 24, des signaux avec le système bord 3.*

Ledit émetteur-récepteur comporte une interface de communication 28 avec le module d'assistance à l'atterrissage 21. Ladite interface 28 comporte par exemple un appareil E/S (appareil Entrée/Sortie ou I/O pour In/Out) Ethernet et de préférence encore un appareil E/S Gigabit Ethernet.

L'émetteur-récepteur 26 comporte en outre un appareil convertisseur 30 permettant de convertir les données échangées entre le système bord 3 et le système sol 2 (par liaison radio) en des données exploitables pour le module d'assistance à l'atterrissage 21 (en liaison Ethernet avec le module de communication sol 20). Ledit appareil convertisseur 30 sera décrit plus bas.

Par ailleurs, l'émetteur-récepteur 26 comporte des moyens de stockage 29 (comme une mémoire) d'au moins un programme d'ordinateur soutenant au moins un algorithme qui sera détaillé plus bas.

On va à présent décrire la structure du module d'assistance à l'atterrissage 21.

Le module d'assistance à l'atterrissage 21 comporte au moins un équipement de correspondance avec la station sol 22 d'une part et le module de communication sol 20 d'autre part (via lequel le module d'assistance à l'atterrissage 21 peut communiquer avec le système bord 3). C'est donc l'équipement de correspondance qui est en interconnexion Ethernet (ici Gigabit Ethernet) avec la station sol 22 et le module de communication sol 20. Par ailleurs, sauf mention contraire, les différents éléments du module d'assistance à l'atterrissage 21 sont interconnectés par Ethernet et de par préférence par Giga - Ethernet.

L'équipement de correspondance comporte une interface de communication spécifique 31 qui est ici un modulateur/démodulateur ou Modem. L'interface de communication est dite spécifique en ce qu'elle est principalement à destination de la communication avec le système bord 3.

L'équipement de correspondance comporte également une interface de communication générale qui est par exemple un commutateur 32. Le commutateur 32 est par exemple un commutateur Ethernet et par exemple un commutateur Gigabit Ethernet (ou « Switch Gigabit Ethernet »).

L'interface de communication est dite générale en ce qu'elle assure une interconnexion (ici par Gigabit Ethernet) module de communication bord 5/ module d'assistance à l'atterrissage 21 mais également module d'assistance à l'atterrissage 21/station sol 22 mais également entre éléments du module d'assistance à l'atterrissage 21 mais également entre éléments du module de communication sol 20. Le commutateur 32 permet donc ici de distribuer les flux de données entre :
- le module d'assistance à l'atterrissage 21 et la station sol 22, et/ou
- le module d'assistance à l'atterrissage 21 et les différents sous-modules 25, et/ou
- les différents sous-modules 25 entre eux, et/ou
- un ou plusieurs éléments du module d'assistance à l'atterrissage 21 avec ou plusieurs autres éléments du module d'assistance à l'atterrissage 21.

De préférence, le module d'assistance à l'atterrissage 21 comporte au moins un appareil E/S 33 Ethernet (ou appareil E/S Gigabit Ethernet) interconnecté au commutateur 32. Ledit module d'assistance à l'atterrissage 21 comporte par ailleurs au moins un organe de calcul 34, telle que par exemple un calculateur. L'organe de calcul 34 est interconnecté audit appareil E/S Ethernet 33 de sorte à communiquer via ledit appareil E/S Ethernet 33 avec le commutateur 32 et par là avec l'extérieur du module d'assistance à l'atterrissage 21. L'organe de calcul 34 comporte ici des moyens de stockage (comme une mémoire) d'au moins un programme d'ordinateur soutenant au moins un algorithme qui sera détaillé plus bas.

En outre, le module d'assistance à l'atterrissage 21 comporte un organe de gestion 35 du déplacement de l'aéronef vis-à-vis de la zone d'atterrissage 4. Ledit organe de gestion 35 est interconnecté au commutateur 32 ainsi qu'ici à l'interface de communication spécifique 31.

Le module d'assistance à l'atterrissage 21 comporte un appareil de synchronisation 36 qui est interconnecté au commutateur.

L'appareil de synchronisation 36 comprend par exemple un serveur de temps 37.

Le serveur de temps 37 est un serveur de temps 37 « protocole de temps réseau » (plus connu sous le terme de protocole NTP pour « Network Time Protocol »), et de préférence un serveur de temps 37 « protocole de temps de précision » (plus connu sous le terme de protocole PTP pour « Precision Time Protocol ») i.e. un serveur de temps 37 PTP. On rappelle que le PTP est un protocole Ethernet de synchronisation d'horloges, normalisé sous le nom IEEE 1588V1 pour la première version, IEEE 1588V2 pour la deuxième version ou bien encore IEC 61588.

L'appareil de synchronisation 36 est configuré pour synchroniser les différents éléments du module d'assistance à l'atterrissage 21 et de préférence pour synchroniser les différents éléments du système sol 2 entre eux et de préférence encore pour synchroniser les différents éléments du système sol 2 et du système bord 3 entre eux. Pour la suite de la demande par « synchronisation » on entend une synchronisation par protocole PTP (pouvant également s'appeler synchronisation par protocole IEEE 1588 V2). Ainsi, l'interface de communication spécifique 31 est ici apte à mettre en œuvre le protocole PTP ; l'interface de communication 10 est apte à mettre en œuvre le protocole PTP ; le commutateur 32 est un commutateur apte à mettre en œuvre le protocole PTP ; l'interface de communication 28 de chaque sous-module 25 est une interface apte à mettre en œuvre le protocole PTP ; l'appareil E/S 33 du est un appareil E/S apte à mettre en œuvre le protocole PTP ; l'organe de gestion 35 est un appareil apte à mettre en œuvre le protocole PTP ; etc.

Le serveur de temps 37 devant transmettre un horodatage aux différents éléments de l'installation, il est donc indexé sur une horloge de référence 38.

De préférence, ladite horloge de référence 38 est une horloge atomique.

De préférence encore, ladite horloge atomique 38 est couplée à au moins un récepteur d'un système de positionnement par satellites, ou système GNSS (GPS, GALILEO, GLONASS ...). Ceci permet de pouvoir coupler l'installation 1 avec ledit système GNSS. On note toutefois que si ce système GNSS n'est pas disponible même temporairement, l'installation 1 peut continuer à fonctionner sans pertes de performances du fait que l'horloge de référence 38 soit une horloge atomique. Ladite horloge de référence 38 fait ou non partie du système sol 3 et/ou fait ou non partie du module d'assistance à l'atterrissage 21. Dans le cas présent l'horloge de référence est incorporée au module d'assistance à l'atterrissage 21 et plus particulièrement à l'appareil de synchronisation 36. Au sein du module d'assistance à l'atterrissage 21, une information caractéristique de l'horloge de référence 38 (telle qu'une information d'horodatage indexée sur l'horloge de référence 38) est par exemple transmise par le serveur de temps 37 au moins à l'organe de calcul 34 et à l'interface de communication spécifique 31 (soit directement soit par l'intermédiaire de l'organe de calcul 34).

De préférence l'organe de gestion 35 et/ou le commutateur 2 reçoit également ladite information caractéristique de l'horloge de référence 38.

Au sein de l'installation 1, l'information caractéristique de l'horloge de référence 38 est ensuite transmise au moins aux différents sous-modules 35 (via le commutateur 32) et de préférence également au module de communication bord 5 (via l'interface de communication spécifique 31, le commutateur 32 puis le module de communication sol 20). De préférence, l'information caractéristique de l'horloge de référence 38 est également transmise à la station sol 22 (via le commutateur 32).

On comprend donc que tout le système sol 2 est ainsi synchronisé à l'horloge de référence 38, et que le système bord 3 est également synchronisé sur la même horloge de référence 38. L'installation 1 ainsi décrite permet en effet l'échange d'une information d'horodatage entre le système bord 3 et le système sol 2 pour la synchronisation de l'installation 1. On retient que cette synchronisation s'effectue sur une information d'horodatage précise i.e. sur un temps précis. Dans le cas présent, la synchronisation sur une information d'horodatage précise, entre notamment le système bord 3 et le système sol 2, est assurée en particulier par le serveur de temps 37 et le recours au protocole PTP (parfois appelé protocole IEEE1588V2) au travers des connections entre le système bord 3 et le système sol 2.

Sur un autre aspect, dans l'installation 1 ainsi décrite, les connections intra-système sol 2 sont basées sur un protocole internet classique (ou Internet Protocol ou IP) - qui permet donc d'appliquer le protocole PTP - et par exemple un protocole IP de type « protocole de diagramme utilisateur » (ou User Datagram Protocol ou UDP). Les connections intra-système bord 3 sont également basées ici sur un protocole UDP/IP - qui permet donc d'appliquer le protocole PTP.

Le système sol 2 et le système bord 3 sont configurés pour pouvoir communiquer entre eux via une liaison radio qui est de préférence également compatible d'un protocole IP - qui permet donc d'appliquer le protocole PTP - et par exemple d'un protocole UDP/IP.

De la sorte, toute l'installation 1 a recours à un même protocole (ici UDP/IP) pour l'échange de données ce qui simplifie la communication au sein de l'installation 1.

Par exemple, l'installation 1 est configurée de sorte que la liaison système sol 2/système bord 3 soit une liaison « de contrôle et de commande » encore connue sous le nom de liaison C2 (encore appelée liaison « command and control ») qui supporte les protocoles IP et par exemple le protocole UDP/IP.

Ceci est particulièrement avantageux dans le cadre d'une application militaire. En effet, la liaison C2 respecte un standard de liaison de données tactiques de l'OTAN.

On parlera donc par la suite de liaison C2 entre l'interface de communication spécifique 31 et l'interface de communication 9 du système bord 3. La liaison C2 est donc un lien bidirectionnel.

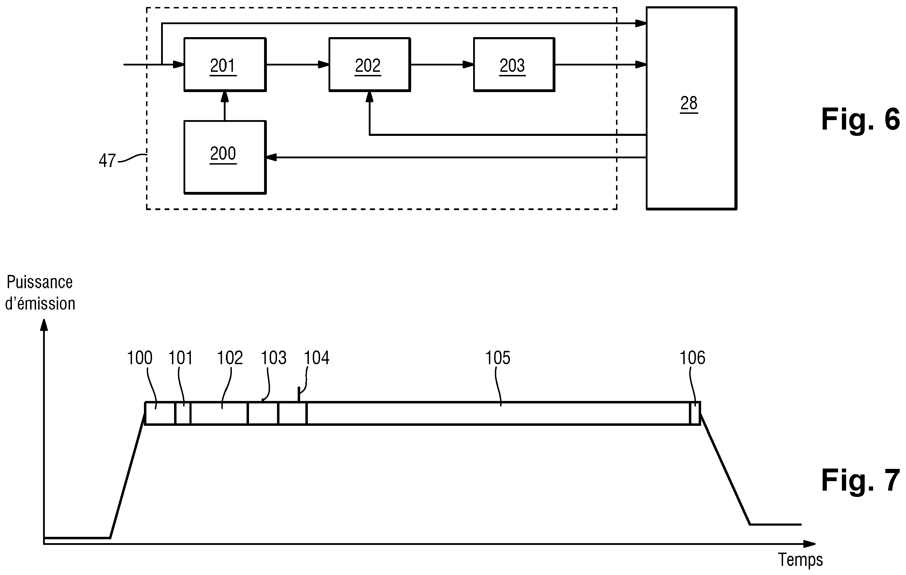

La liaison C2 est un lien radio. La liaison C2 supporte par ailleurs le protocole UDP/IP. La liaison C2 permet ainsi l'échange de l'information caractéristique de l'horloge de référence 38 entre le système bord 3 et le système sol 2. Tout signal de liaison C2 présente une forme d'onde particulière illustrée à la figure 7. Le signal présente ici successivement un « burst guard time » 100 (ou « temps de garde en rafale »), un « HPA ramping » 101 (ou « rampe HPA), un préambule 102 (ou « preamble »), un mode 103 (ou « mode »), un champ d'horodatage 104 (ou « timestamp »), une séquence de données 105 et de nouveau un « HPA ramping » 106.

L'information d'horodatage peut ainsi être échangée entre le système bord 3 et le système sol 2 à travers le champ d'horodatage.

En conséquence, l'interface de communication spécifique 31 est une interface de communication spécifique C2 (ici un Modem C2) c'est-à-dire une interface permettant de transmettre (via le commutateur 32 puis le module de communication 20 du système sol 2) à l'aéronef (et plus précisément avec l'interface de communication 10) des flux de données respectant le standard de liaison C2. L'interface de communication 10 est ici une interface de communication bord C2 (ici un Modem C2) c'est-à-dire une interface de communication permettant de transmettre (via le module de communication 20 puis le commutateur 32) au système sol 2 (et plus précisément à l'interface de communication spécifique 31) des flux de données respectant le standard de liaison C2.

On note ici que l'interface de communication spécifique 31 et l'interface de communication 10 ne communiquent pas directement entre elles mais via notamment, les modules de communication bord 5 et sol 20 et en particulier les antennes bord 7 et sol 24.

Par ailleurs, on rappelle que le lien C2 est un lien radio alors que les éléments du système bord 3 communiquent entre eux massivement par Ethernet et les éléments du système sol 2 communiquent entre eux massivement par Ethernet. L'appareil convertisseur 11 du système bord 3 a ainsi pour but d'adapter des données reçues du système sol 2, via la liaison C2, en données exploitables par le reste du système bord 3 et inversement.

Par exemple l'appareil convertisseur 11 comporte un bloc 39 de transposition des fréquences des signaux reçus (fréquences appartenant à une bande de radiofréquence allouée à la liaison C2) vers une bande de radiofréquence de base (la bande de radiofréquence de base étant sensiblement de 0 Hertz alors que la bande de radiofréquence allouée à la liaison C2 étant de l'ordre de quelque GigaHertz) puis filtrage des signaux obtenus, ledit bloc 39 étant agencé en aval du circuit frontal de radio-fréquence 9. Optionnellement, l'appareil convertisseur 11 comporte également un bloc de contrôle du gain des signaux reçus et par exemple un bloc de contrôle automatique de gain (plus connu sous l'acronyme anglais CAG). Un tel bloc permet d'amplifier les signaux reçus de manière à compenser les pertes de transmissions notamment dues à la distance entre l'aéronef et le système sol 2. Un tel bloc peut être agencé à l'intérieur du bloc 39, en aval du bloc 39 ou en amont du bloc 39.

L'appareil convertisseur 11 comporte également un bloc d'échantillonnage 40 (tel qu'un CAN) des signaux filtrés fournis par le bloc 39 (optionnellement le bloc de contrôle des gains) en données numériques qui peuvent ainsi être échangées par liaison Ethernet au sein de l'aéronef. Inversement, l'appareil convertisseur 11 comporte un bloc 41 d'échantillonnage (tel qu'un CNA) de données numériques à transmettre au système sol 2 suivi d'un bloc de filtrage 42 et transposition des données fournies par le bloc 41 sur la bande radiofréquence de la liaison C2.

De la même manière, l'appareil convertisseur 30 (dont un seul est référencé ici) de chaque émetteur-récepteur 26 du système sol 2 a pour but d'adapter des données reçues du système bord 3, via la liaison C2, en données exploitables par le reste du système sol 2 et inversement.

Par exemple l'appareil convertisseur 30 comporte un bloc 43 de transposition des fréquences des signaux reçus (fréquences appartenant à une bande de radiofréquence allouée à la liaison C2) vers la bande de radiofréquence de base puis filtrage des signaux obtenus, ledit bloc 43 étant agencé en aval du circuit frontal de radio-fréquence. L'appareil convertisseur 30 comporte optionnellement un bloc de contrôle du gain des signaux reçus et par exemple un bloc de contrôle automatique de gain. Un tel bloc peut être agencé à l'intérieur du bloc 43, en aval du bloc 43 ou en amont du bloc 43.

L'appareil convertisseur 30 comporte également un bloc d'échantillonnage 44 (tel qu'un CAN) des signaux filtrés fournis par le bloc 43 (optionnellement du bloc de contrôle du gain des signaux) en données numériques qui peuvent ainsi être échangées par liaison Ethernet au sein du reste du système sol 2.

Inversement, l'appareil convertisseur 30 comporte un bloc d'échantillonnage 45 (tel qu'un CNA) de données numériques à transmettre au système bord 3 suivi d'un bloc 46 de filtrage et transposition des données fournies par le bloc 45 sur la bande radiofréquence de la liaison C2.

On va à présent décrire davantage l'organe de calcul 34 et les émetteurs-récepteurs 29 soutenant des algorithmes et qui ont déjà été introduits précédemment.

Chaque émetteur-récepteur 29 comporte un bloc 47 d'estimation d'au moins une information caractéristique d'une distance séparant l'aéronef de chacune des sous-modules 25 (et donc des antennes 24). L'information caractéristique est par exemple une information caractéristique d'une pseudo-distance séparant l'aéronef de chacun des sous-modules 25. L'information caractéristique est par exemple une TOA ou bien une TDOA.

Un exemple de mise en œuvre du bloc 47 va être à présent décrit en référence à la figure 6.

Le système bord 3 génère un signal de référence par la liaison C2 qui est capté par l'émetteur-récepteur 26.

Le bloc 47 détermine lors d'une première phase 201 une convolution entre le préambule 200 du signal de référence et un motif de ce préambule (qui est connu et prédéfini) afin d'obtenir un pic de corrélation.

Le bloc 47 détermine lors d'une deuxième phase 202 à partir du signal de référence, une TDOA entre l'aéronef et le sous-module considéré. Par exemple, le bloc 47 détermine plusieurs TOA entre l'aéronef et l'antenne 24 du sous-module 25 à partir du temps que le signal de référence a mis pour atteindre l'antenne 24 considérée (directement lié à la distance entre l'aéronef et ladite antenne puisque la position de cette dernière est fixe et donc connue dans un repère cartésien lié à la zone d'atterrissage 4). Pour obtenir plusieurs TOA, le bloc 47 effectue plusieurs fois la même mesure (par exemple à intervalle de temps régulier et de courte durée). Le bloc 47 compare lesdites TOA pour obtenir la TDOA qui est représentative de la moyenne des différentes TOA.

De façon avantageuse, lors de cette deuxième phase 202, le bloc utilise le pic de corrélation comme « top » de synchronisation temporel pour effectuer les mesures de TOA et/ou obtenir la TDOA.

En réalité, le « top » de synchronisation temporel permet d'effectuer un premier cadrage temporel entre le système bord 3 et le système sol 2 i.e. une synchronisation grossière entre les deux systèmes. La synchronisation entre le système bord 3 et le système sol 2 est ensuite renforcée par le partage de temps précis (l'information d'horodatage) au sein de l'installation et en particulier par la transmission de l'information d'horodatage par la liaison C2.

Le pic de corrélation s'ajoute donc avantageusement à la synchronisation par le partage de l'information d'horodatage.

De préférence, le bloc 47 comporte une troisième phase 203 de filtrage de la TDOA obtenue. Le bloc 47 incorpore à cet effet un filtre comme par exemple un filtre de Kalman. Celui-ci permet notamment d'améliorer la précision de la mesure du temps de vol du signal de référence représentatif de la distance aéronef/sous-module 25 considéré. Le filtre de Kalman peut se baser sur les différentes TOA calculées à la phase précédentes 202 pour obtenir la TDOA filtrée.

Le bloc 47 transmet ainsi une TDOA filtrée au module d'assistance à l'atterrissage 21, et en particulier à l'organe de calcul 34, et en particulier à un bloc 48 (dudit organe de calcul 34) de détermination d'au moins une information caractéristique de la direction générale brute d'arrivée de l'aéronef vis-à-vis d'un point donné de la zone d'atterrissage 4. Le point donné est par exemple le centre de la zone d'atterrissage 4.

Ledit bloc 48 reçoit par exemple toutes les TDOA filtrées et combine ces différents signaux afin d'obtenir :
- la direction générale brute d'arrivée de l'aéronef dans le repère cartésien lié à la zone d'atterrissage 4 et/ou
- la distance entre l'aéronef et la zone d'atterrissage 4 et plus particulièrement la distance entre un point donné de l'aéronef (par exemple son centre de gravité) et le point donné de la zone d'atterrissage 4.

Ainsi ici l'organe de calcul 34 est configuré pour déterminer deux informations caractéristiques de la direction générale brute d'arrivée de l'aéronef vis-à-vis d'un point donné de la zone d'atterrissage 4.

Le bloc 48 combine par exemple les différents signaux par multilatération.

Par ailleurs on note que la direction générale brute s'exprime par trois coordonnées (x,y,z) dans le repère cartésien précité.

De préférence, le bloc 48 est ainsi configuré pour transformer ces coordonnées en coordonnées sphériques. Les coordonnées sphériques ainsi obtenues fournissent notamment l'angle d'élévation brut et l'angle d'azimut brut de l'aéronef et donc une DOA brute de l'aéronef.

Le bloc 48 transmet ici la distance aéronef/zone d'atterrissage à l'organe de gestion 35.

Le bloc 48 transmet par ailleurs ici la DOA brute à un bloc 49 (appartenant à l'organe de calcul) de détermination d'une information caractéristique de la direction générale affinée d'arrivée de l'aéronef vis-à-vis du point donné de la zone d'atterrissage 4.

On retient ainsi que le système sol 2 supporte un algorithme général réparti entre le module de communication 20 (par détermination des TDOA) et le module d'assistance à l'atterrissage 21 (par multilatération) permettant de déterminer la DOA de l'aéronef et sa distance via à vis de la zone d'atterrissage 4.

On va à présent décrire le bloc 49 de détermination d'une information caractéristique de la direction générale affinée d'arrivée de l'aéronef vis-à-vis du point donné de la zone d'atterrissage 4.

De préférence, le bloc 49 comporte un sous-bloc 50 pour le recalage des différentes voies de communication provenant des différents sous-modules 25.

Ceci permet de prendre en compte le fait que les distances de connexion entre les différents sous-modules 25 et le module d'assistance à l'atterrissage 21 ne sont pas identiques. Le sous-bloc 50 compense ainsi les erreurs de calibrations et de retards entre les différents sous-modules 25. L'ensemble des signaux provenant des différents sous-modules 25 sont ainsi synchronisés.

Le bloc 49 comporte par ailleurs un sous-bloc 51 qui, à partir des signaux recalés fournis par le sous-bloc 50, va détecter des DOA incluant celles du signal émis par l'aéronef mais également celles éventuellement émises par des brouilleurs (exprimées en coordonnées sphériques dans le repère lié à la zone d'atterrissage).

Ces informations sont transmises à un autre sous-bloc 52 du bloc qui reçoit également du bloc 48 la DOA brute calculée précédemment. Le sous-bloc 52 combine ces différentes informations pour différencier les DOA des brouilleurs de celle de l'aéronef.

Par ailleurs, le sous-bloc 52 affine alors la DOA brute calculée précédemment avec la DOA ainsi obtenue par la succession des sous-blocs 50-51 pour obtenir une DOA affinée. D'autre part, le sous-bloc 52 communique avec un sous-bloc 54 supplémentaire du bloc 49 pour lui fournir des informations caractéristiques des DOA brouilleurs et du DOA aéronef ainsi obtenue par la succession des sous-blocs 50-51-52. Ledit sous-bloc 54 en déduit une rejection des signaux des brouilleurs afin de ne conserver que le signal propre à l'aéronef.

Le signal propre à l'aéronef (soit ici un signal de type C2) est ainsi transmis à l'interface de communication spécifique 31. L'interface de communication spécifique 31 peut ainsi transmettre ce signal à l'aéronef et/ou à la station sol 22, ce dernier supervisant l'atterrissage de l'aéronef.

Le bloc 49 ainsi décrit s'appuie donc ici (et en particulier son sous-bloc 54) sur un processus CRPA (pour Controlled Radiation Pattern Antenna ou Antenne à diagramme de rayonnement contrôlé en français - servant d'algorithme anti-brouillage) pour rejeter les brouilleurs (dans leur direction d'arrivée) et pour déterminer également la direction d'arrivée des brouilleurs. *La capacité de réjection de ce processus permet de rejeter jusqu'à deux brouilleurs simultanément (parmi trois signaux dont celui en provenance de l'aéronef).*

De manière ingénieuse et non connue de l'état de l'art, c'est la DOA brute transmise par le bloc 48 qui permet de discriminer parmi les signaux identifiés au niveau du sous-bloc 51 le signal provenant de l'aéronef de ceux provenant des brouilleurs.

La combinaison du processus CRPA avec la DOA brute transmise par le bloc 48 s'avère donc particulièrement ingénieuse et non connue de l'état de l'art.

Par ailleurs, on comprend qu'on estime ici deux DOA de l'aéronef différentes : l'une par la succession des sous-blocs 50-51-52 et l'autre par le bloc 48. *Il convient de noter que la DOA obtenue par la succession des sous-blocs 50-51-52 est plus précise que celle obtenue par le bloc 48, notamment pour les angles les plus fermés i.e. les plus proches de zéro.* En combinant lesdites deux DOA, on obtient une DOA affinée présentant une très bonne précision.

De préférence, le bloc 49 comporte également un sous-bloc 53 de filtrage. A cet effet, le sous-bloc 53 comporte un filtre et par exemple un filtre de Kalman. La DOA affinée est ainsi transmise par le sous-bloc 52 au sous-bloc 53.

Ceci permet encore davantage d'améliorer la détermination de la DOA de l'aéronef par exemple en réduisant le bruit sur les mesures angulaires.

Les inventeurs ont ainsi pu obtenir une précision sur les angles d'azimut et d'élévation en sortie du filtre de Kalman de l'ordre de 0,1°.

La DOA affinée filtrée est ensuite fournie à l'organe de gestion 35.

On comprend donc que le bloc 49 est configuré pour effectuer un filtrage spatial des différents signaux reçus par le système sol 2 afin notamment de différencier l'aéronef des éventuels brouilleurs et de pouvoir fournir ainsi une DOA affinée filtrée à l'organe de gestion.

De préférence, le bloc 49 est également configuré pour effectuer additionnellement un filtrage temporel des différents signaux reçus par le système sol 2 afin notamment de pouvoir éliminer les signaux « échos » soient les signaux provenant de la réflexion des ondes radios sur des obstacles tels que des bâtiments. Le filtrage peut se faire de manière temporelle puisque les « échos » mettront plus de temps à atteindre le système sol 2 que le signal initial de par les réflexions.

Le filtrage temporel du bloc 49 est ainsi dit filtrage « multi-trajets ».

Un tel filtrage peut par exemple être mis en œuvre dans un des sous-bloc du bloc 49. Par exemple le processus CRPA mis en œuvre dans le bloc 49 peut intégrer directement ce filtrage multi-trajets en plus d'aider à réjecter les brouilleurs.

La demande de brevet française FR 3 116 401 de la présente demanderesse propose ainsi un processus CRPA pouvant inclure un tel filtrage multi-trajets.

L'organe de gestion 35 récupère donc du bloc 49 la DOA affinée filtrée ainsi que la distance aéronef/zone d'atterrissage comme cela a déjà été indiqué et optionnellement la DOA des brouilleurs.

A partir de ces données et d'une trajectoire prédéfinie, l'organe de gestion 35 détermine une trajectoire d'atterrissage de l'aéronef corrigée.

De préférence, l'organe de gestion 35 détermine ladite trajectoire également à partir du signal propre à l'aéronef transmis à l'interface de communication spécifique 31 qui le transmet lui-même à l'organe de gestion 35.

Cette trajectoire d'atterrissage de l'aéronef corrigée est transmise tout d'abord à l'interface de communication spécifique 31, puis au commutateur 32, puis au module de communication sol 20, puis au module de communication bord 5, puis à l'interface de communication 10 et enfin à l'organe de calcul 6 (et optionnellement à son autopilote).

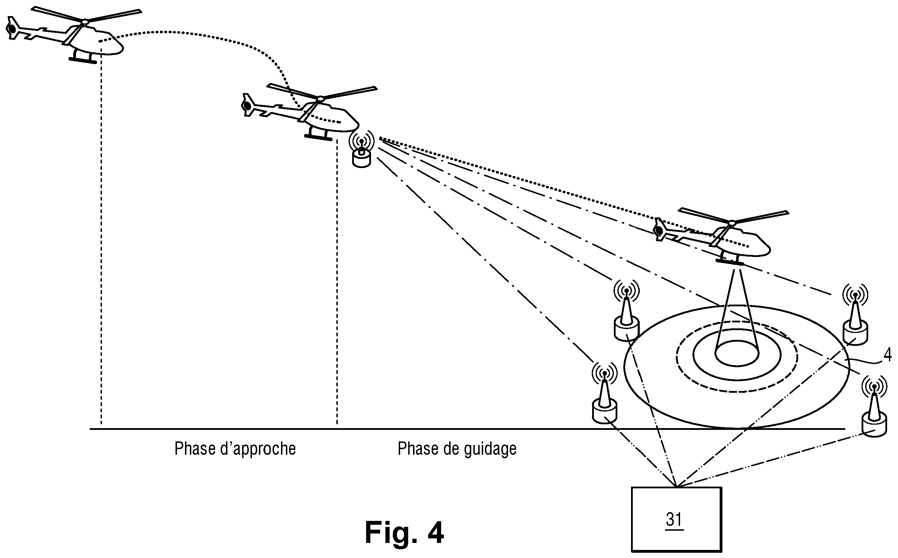

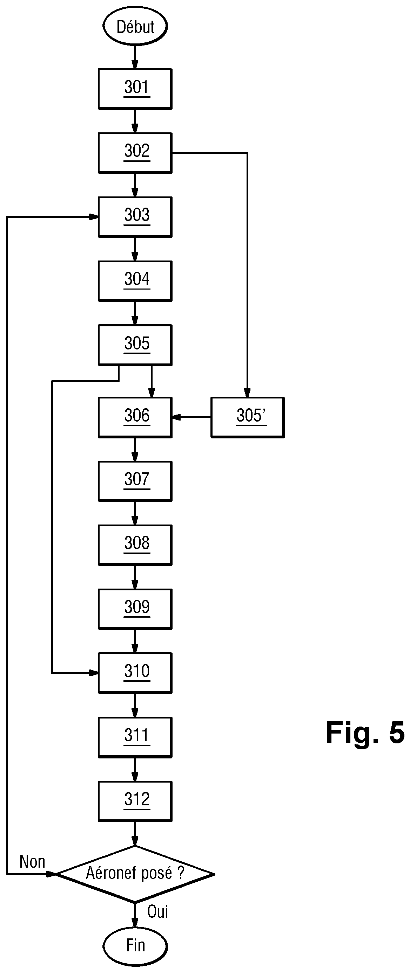

On va à présent décrire, en référence aux figures 4 et 5, une mise en œuvre particulière du procédé implémenté dans l'installation qui vient d'être détaillée.

Lors d'une phase d'approche, l'aéronef se rapproche de la zone d'atterrissage 4.

Lorsque l'aéronef est suffisamment près de la zone d'atterrissage pour que les systèmes bord 3 et sol 2 puissent communiquer entre eux, la phase de guidage commence. Par exemple, la phase de guidage débute lorsque l'aéronef est à une distance du point donné de la zone d'atterrissage 4 comprise entre 7000 et 5000 mètres et par exemple à une distance d'environ 6000 mètres du point donné de la zone d'atterrissage. L'aéronef se trouve alors à une altitude d'environ 500 mètres du sol.

Lors d'une première étape 301, une communication est établie entre le système sol 2 et le système bord 3 et plus particulièrement entre l'interface de communication spécifique 31 et l'interface de communication 10 (à travers d'autres éléments comme ce qui a déjà été indiqué). Cette communication se fait via la liaison C2 comme déjà indiqué. Lors d'une deuxième étape 302, le système sol 2 et le système bord 3 sont synchronisés entre eux par échange de l'information d'horodatage liée à l'horloge de référence et optionnellement en s'aidant du pic de corrélation. L'échange de l'information d'horodatage se fait par protocole PTP via la liaison C2, cette même liaison C2 permettant également avantageusement de pouvoir obtenir le pic de corrélation. Le pic de corrélation permet d'effectuer un premier cadrage temporel qui est affiné via le partage de l'information d'horodatage.

Cette étape 302 inclut également une synchronisation des différents éléments du système sol 2 entre eux (à la différence que l'information d'horodatage est alors échangée par connexion Ethernet et non par la liaison C2) . Cette étape inclut également une synchronisation des différents éléments du système bord 3 entre eux (à la différence que l'information d'horodatage est alors échangée au sein du système bord par connexion Ethernet et non par la liaison C2).

A l'issue de la deuxième étape 302, de préférence, toute l'installation 1 est synchronisée sur l'horloge de référence.

Le fait de synchroniser au moins le système sol 2 et le système bord 3 entre eux permet d'améliorer la précision des mesures effectuées pour géolocaliser l'aéronef.

Ceci limite en particulier le biais sur les mesures et donc sur la détermination de la position de l'aéronef.

Lors d'une troisième étape 303, on calcule au niveau de chaque sous-module 25 la TDOA comme indiqué précédemment. Lors d'une quatrième étape 304, on applique un filtrage sur chacune TDOA, comme par exemple un filtrage de Kalman, pour obtenir au final quatre TDOA filtrées.

Lors d'une cinquième étape 305, ces différentes TDOA filtrées sont combinées entre elles, par exemple par multilatération, pour obtenir une distance aéronef-zone d'atterrissage ainsi qu'une DOA brute de l'aéronef.

Lors d'une cinquième étape bis 305', un recalage est effectué entre les différentes voies de communication émetteur/récepteur 26 du système sol 2. A cet effet, on s'appuie par exemple sur le retard entre lesdites différentes voies lors de la deuxième étape de synchronisation 302. Lors d'une sixième étape 306, on détermine la DOA des signaux arrivant sur les différentes voies de communication précitées. De préférence, on s'appuie à cet effet sur le pseudo-spectre constituant le diagramme combiné des différentes antennes 24 du module de communication sol 20. Lors d'une septième étape 307, en s'aidant de la DOA brute de l'aéronef obtenue à la cinquième étape 305, on discrimine parmi les différentes DOA obtenues à la sixième étape 306, celle de l'aéronef et celles des éventuels brouilleurs.

On note ainsi ici que c'est la DOA brute de l'aéronef (obtenue via des TDOA) qui permet de discriminer le signal provenant de l'aéronef de celui des éventuels brouilleurs. Au cours de cette étape 307, on détermine également la DOA affinée de l'aéronef.

Lors d'une huitième étape 308, on réjecte les signaux provenant des brouilleurs pour ne conserver que le signal provenant de l'aéronef.

Lors d'une neuvième étape 309, on traduit le signal issu de l'aéronef en un signal exploitable par l'organe de gestion 35 (par exemple on effectue une démodulation du signal).

Lors d'une dixième étape 310, à partir du signal traduit à la neuvième étape 309, de la DOA affinée (éventuellement filtrée) obtenue à la septième étape 307 et de la distance aéronef-zone d'atterrissage obtenue à la cinquième étape 305, on détermine une trajectoire en quatre dimensions (temps et espace - par exemple distance aéronef/zone d'atterrissage, angle d'azimut et angle d'élévation) de l'aéronef.

Lors d'une onzième étape 311, on en déduit au moins une consigne de guidage de la trajectoire notamment en regard d'un couloir d'approche et d'une trajectoire initiale prédéfinie.

Lors d'une douzième étape 312, on transmet la consigne de guidage à l'aéronef via notamment l'interface de communication spécifique 31, le commutateur 32, le module de communication sol 20 et le module de communication bord 5. Les étapes 3 à 12 se répètent tant que l'aéronef n'est pas posé.

On a ainsi décrit une installation et un procédé permettant d'aider à l'atterrissage d'un aéronef.

On a ainsi décrit une installation et un procédé permettant d'aider à l'atterrissage d'un aéronef, et en particulier et de manière non limitative, à l'atterrissage automatique d'un aéronef.

La synchronisation par le partage d'un temps précis au sein de l'installation permet d'améliorer grandement l'aide à l'atterrissage de l'aéronef.

L'installation et le procédé ainsi décrits se basent sur la radiolocalisation pour aider l'atterrissage d'un aéronef. De façon avantageuse, la combinaison de la détermination de la DOA de l'aéronef (par double méthode) et du procédé d'antibrouillage CRPA limite les risques d'incertitudes liés au brouillage (accidentels ou non) des signaux réceptionnés par le module de communication sol.

D'autres part la combinaison de la détermination des TOA et DOA avec le procédé d'antibrouillage CRPA permet de réjecter dans les directions de leurs arrivées les éventuels brouilleurs (à concurrence usuellement de deux brouilleurs).

Ceci est particulièrement avantageux dans le cas d'une application en environnement urbain où les brouillages et les multi-trajets peuvent être importants.

L'installation et le procédé ainsi décrits se basent sur l'utilisation conjointe de la différence entre les instants d'arrivée d'un signal de référence émis périodiquement par l'aéronef et de l'angle d'arrivée au niveau des ancres radio au sol.

Bien entendu, l'invention n'est pas limitée à la mise en œuvre particulière décrite mais englobe toute variante entrant dans le champ de l'invention telle que définie par les revendications.

Ainsi, l'aéronef pourra être tout type d'appareil apte à se déplacer dans les airs comme un avion, un hélicoptère, un drone, un lanceur réutilisable ...

Bien qu'ici le bloc soit intégré au module de communication sol, ledit bloc pourra être intégré au sein du module d'assistance à l'atterrissage.

Bien qu'ici le point donné soit le centre de la zone d'atterrissage, le point donné pourra être un autre point de la zone d'atterrissage comme par exemple l'un des coins de la zone d'atterrissage.

Bien qu'ici la zone d'atterrissage comporte quatre sous-modules, la zone d'atterrissage pourra comporter un nombre différent de sous-modules et par exemple comporter au moins trois sous-module chacun équipé d'une antenne.

Bien qu'ici la zone d'atterrissage soit terrestre, la zone d'atterrissage pourra être navale et être par exemple une hélisurface sur un navire. De préférence alors les attitudes du navire et de l'aéronef seront échangées entre le système bord et le système sol.

L'installation pourra comporter un altimètre laser pour permettre le guidage final lorsque l'aéronef est à quelques mètres du point donné de la zone d'atterrissage. Ceci permettra d'avoir un guidage final avec une précision de quelques centimètres.

L'installation pourra être conformée pour prendre en compte un ou plusieurs paramètres supplémentaires que la DOA affinée de l'aéronef pour assister à l'atterrissage comme par exemple le trafic aérien autour de la zone d'atterrissage, la disponibilité de la zone d'atterrissage, la météo (comme l'orientation du vent) ...

Le procédé pourra comporter une phase de caractérisation de chacune des antennes du système sol afin si besoin de disposer du pseudo-spectre constituant le diagramme de rayonnement combiné des différentes antennes du système sol. Chaque sous-module pourra comporter des moyens de calibration pour prendre en compte les variations de gain et/ou de phase propre à chaque sous-module en fonction de la fréquence d'émission et/ou de réception du sous-module considérée et de la température dudit sous-module. Le système sol, et par exemple le module de communication sol, pourra ainsi comprendre un bloc d'harmonisation des gains et/ou de phases entre les différents sous-modules.

L'installation pourra voir une application civile et non militaire.

L'installation pourra ne pas respecter de standard de liaison de données tactiques de l'OTAN, la liaison système sol/système bord étant alors une autre liaison radio permettant de supporter un protocole IP et de préférence un protocole normalisé sous le nom IEEE 1588V1 pour la première version, IEEE 1588V2 pour la deuxième version ou bien encore IEC 61588.

Les différentes étapes du procédé pourront être mises en œuvre dans un sens différent de celui qui a été indiqué, étant entendu qu'au moins deux étapes pourront être effectuées en parallèle.

La TDOA transmise par le module de communication pourra ne pas être filtrée (ou pourra être filtrée au sein du module d'assistance à l'atterrissage).

La DOA affinée transmise à l'organe de gestion pourra ne pas être filtrée ou être filtrée au sein de l'organe de gestion. Si les coordonnées de positionnement par satellites (GPS, GNSS, Galiléo ...) de l'aéronef sont disponibles et/ou non brouillées, l'organe de gestion 35 pourra récupérer lesdites coordonnées par exemple par communication entre l'aéronef et l'organe de gestion 35. L'organe de gestion 35 pourra avoir recours à ces coordonnées (en remplacement ou en complément d'un ou de plusieurs paramètres précités à savoir la DOA affinée filtrée, la distance aéronef/zone d'atterrissage, la DOA des brouilleurs et le signal propre à l'aéronef) pour générer la trajectoire d'atterrissage.

On pourra se passer du pic de corrélation pour assurer la synchronisation système bord/système sol.

## Revendications

1. Procédé d'assistance à l'atterrissage d'un aéronef comportant un système bord (3), sur une zone d'atterrissage (4) associée à un système sol (2), le système sol comprenant plusieurs sous-modules de communication (25) comprenant chacun une antenne, le système bord et le système sol étant aptes à communiquer ensemble, le procédé comportant les étapes de :
- Lors d'une première phase d'atterrissage, synchroniser (302) le système bord et le système sol en échangeant au moins une information d'horodatage entre le système sol et le système bord,
- Lors d'une deuxième phase d'atterrissage, postérieure à la première phase d'atterrissage :
• premier point : Estimer (303) au niveau de chaque sous-module au moins une information caractéristique de la distance séparant l'aéronef du sous-module concerné, et combiner (305) lesdites informations pour en déduire au moins une information caractéristique de la direction générale brute d'arrivée de l'aéronef vis-à-vis d'un point donné de la zone d'atterrissage,
le procédé étant **caractérisé en ce qu'**il comporte les étapes de:
• deuxième point : Estimer au moins une information caractéristique de la direction d'un signal émis par l'aéronef vis-à-vis du système sol,
• troisième point : Comparer (307) l'information caractéristique de la direction générale brute d'arrivée de l'aéronef établie au premier point avec au moins l'information caractéristique de la direction du deuxième point, et déterminer au moins une information caractéristique de la direction générale affinée d'arrivée de l'aéronef vis-à-vis du point donné de la zone d'atterrissage,
• quatrième point : Guider l'aéronef à partir de ladite information caractéristique de la direction générale affinée d'arrivée de l'aéronef vis-à-vis du point donné de la zone d'atterrissage.

2. Procédé selon la revendication 1, dans lequel l'information d'horodatage est celle d'une horloge de référence.

3. Procédé selon la revendication 2, dans lequel horloge de référence est une horloge atomique.

4. Procédé selon la revendication 3, dans lequel l'horloge atomique est couplée à au moins un récepteur d'un système de positionnement par satellites.

5. Procédé selon l'une des revendications 1 à 4, dans lequel l'étape de synchronisation est mise en œuvre par l'intermédiaire d'un « Protocole de Temps de Précision ».

6. Procédé selon l'une des revendications à 1 à 5, dans lequel le système bord (3) et le système sol (2) sont configurés pour échanger des données via une liaison radio qui est compatible d'un protocole internet

7. Procédé selon la revendication 6, dans lequel le protocole internet est un « protocole de diagramme utilisateur ».

8. Procédé selon la revendication 6 ou la revendication 7, dans lequel la liaison est une liaison de contrôle et de commande.

9. Procédé selon l'une des revendications précédentes, dans lequel le point donné de la zone d'atterrissage (4) est le centre de la zone d'atterrissage.

10. Procédé selon l'une des revendications précédentes, dans lequel l'information caractéristique de la distance séparant l'aéronef de chacune des sous-modules est une pseudo-distance.

11. Procédé selon la revendication 10, dans lequel la pseudo-distance est déterminée par un processus « différence d'heure d'arrivée ».

12. Procédé selon l'une des revendications 1 à 11, dans lequel au premier point on combine les informations par multilatération.

13. Procédé selon l'une des revendications précédentes, dans lequel au deuxième point l'information caractéristique de la direction d'un signal émis par l'aéronef est une « direction d'arrivée ».

14. Procédé selon l'une des revendications précédentes, dans lequel au troisième point on s'appuie sur la direction générale brute d'arrivée de l'aéronef pour différencier une direction d'un signal émis par l'aéronef de directions de signaux émis par ou des brouilleurs.

15. Procédé selon la revendication 14, dans lequel les brouilleurs sont rejetés par un anti-brouillage.

16. Procédé selon la revendication 15, dans lequel l'anti-brouillage est un anti-brouillage à Antenne à diagramme de rayonnement contrôlé.

17. Procédé selon l'une des revendications précédentes, comprenant au moins une étape de filtrage de l'information caractéristique de la direction d'un signal émis par l'aéronef vis-à-vis du système sol (2) et/ou une étape de filtrage de la direction générale affinée d'arrivée de l'aéronef vis-à-vis du point donné de la zone d'atterrissage (4).

18. Procédé selon l'une des revendications précédentes, dans lequel le système sol comporte quatre antennes.

19. Procédé selon la revendication précédente, dans lequel la distance séparant deux antennes du système sol est supérieure à la moitié de la longueur d'onde de rayonnement de l'une des deux dites antennes.

## Patentansprüche

1. Verfahren zur Landeunterstützung eines mit einem Bordsystem (3) ausgestatteten Luftfahrzeugs auf einer Landezone (4), die einem Bodensystem (2) zugeordnet ist, wobei das Bodensystem mehrere Kommunikations-Untermodule (25) umfasst, die jeweils eine Antenne umfassen, wobei das Bordsystem und das Bodensystem dafür geeignet sind, miteinander zu kommunizieren, wobei das Verfahren die Schritte enthält, dass:
- während einer ersten Landephase das Bordsystem und das Bodensystem miteinander synchronisiert werden (302), indem zumindest eine Zeitstempel-Information zwischen dem Bodensystem und dem Bordsystem ausgetauscht wird,
- während einer auf die erste Landephase folgenden zweiten Landephase:
• erstens: für jedes Untermodul zumindest eine charakteristische Information betreffend die Entfernung des Luftfahrzeugs zu dem jeweiligen Untermodul eingeschätzt wird (303) und diese Informationen miteinander kombiniert werden (305), um daraus zumindest eine charakteristische Information betreffend die grobe allgemeine Anflugrichtung des Luftfahrzeugs in Bezug auf einen bestimmten Punkt der Landezone abzuleiten, wobei das Verfahren **dadurch gekennzeichnet ist, dass** es die Schritte enthält, dass:
• zweitens: zumindest eine charakteristische Information betreffend die Richtung eines von dem Luftfahrzeug gesendeten Signals in Bezug auf das Bodensystem eingeschätzt wird,
• drittens: die unter erstens ermittelte charakteristische Information betreffend die grobe allgemeine Anflugrichtung des Luftfahrzeugs mit zumindest der unter zweitens ermittelten charakteristischen Information betreffend die Signalrichtung verglichen wird (307) und daraus zumindest eine charakteristische Information betreffend die genauere allgemeine Anflugrichtung des Luftfahrzeugs in Bezug auf den bestimmten Punkt der Landezone bestimmt wird,
• viertens: das Luftfahrzeug anhand der charakteristischen Information betreffend die genauere allgemeine Anflugrichtung des Luftfahrzeugs in Bezug auf den bestimmten Punkt der Landezone geleitet wird.

2. Verfahren nach Anspruch 1, wobei die Zeitstempel-Information eine Referenzuhr-Information ist.

3. Verfahren nach Anspruch 2, wobei es sich bei der Referenzuhr um eine Atomuhr handelt.

4. Verfahren nach Anspruch 3, wobei die Atomuhr mit zumindest einem Empfänger eines satellitengestützten Positionsbestimmungssystems gekoppelt ist.

5. Verfahren nach einem der Ansprüche 1 bis 4, wobei die Synchronisationsphase über ein "Präzisionszeitprotokoll" (Precision Time Protocol, PTP) durchgeführt wird.

6. Verfahren nach einem der Ansprüche 1 bis 5, wobei das Bordsystem (3) und das Bodensystem (2) dafür konfiguriert sind, Daten über eine mit einem Internetprotokoll kompatible Funkverbindung miteinander auszutauschen.

7. Verfahren nach Anspruch 6, wobei es sich bei dem Internetprotokoll um ein "Benutzerdiagrammprotokoll" handelt.

8. Verfahren nach Anspruch 6 oder Anspruch 7, wobei es sich bei der Verbindung um eine Kontroll- und Steuerverbindung handelt.

9. Verfahren nach einem der vorhergehenden Ansprüche, wobei es sich bei dem bestimmten Punkt der Landezone (4) um den Mittelpunkt der Landezone handelt.

10. Verfahren nach einem der vorhergehenden Ansprüche, wobei es sich bei der charakteristischen Information betreffend die Entfernung des Luftfahrzeugs zu einem jeden der Untermodule jeweils um eine Pseudo-Entfernung handelt.

11. Verfahren nach Anspruch 10, wobei die Pseudo-Entfernung durch ein Verfahren zur "Ankunftszeitdifferenz" ermittelt wird.

12. Verfahren nach einem der Ansprüche 1 bis 11, wobei unter erstens die Informationen mittels Multilateration miteinander kombiniert werden.

13. Verfahren nach einem der vorhergehenden Ansprüche, wobei es sich unter zweitens bei der charakteristischen Information betreffend die Richtung eines von dem Luftfahrzeug gesendeten Signals um eine "Einfallsrichtung" handelt.

14. Verfahren nach einem der vorhergehenden Ansprüche, wobei unter drittens die Unterscheidung zwischen einer Richtung eines Signals, das von dem Luftfahrzeug gesendet wird, und den Richtungen von Signalen, die durch Störsender gesendet werden, basierend auf der groben allgemeinen Anflugrichtung des Luftfahrzeugs getroffen wird.

15. Verfahren nach Anspruch 14, wobei die Störsender durch einen Störsenderschutz abgewehrt werden.

16. Verfahren nach Anspruch 15, wobei es sich bei dem Störsenderschutz um einen Störsenderschutz durch Antenne mit gesteuertem Strahlungsdiagramm handelt.

17. Verfahren nach einem der vorhergehenden Ansprüche, umfassend zumindest einen Filterschritt, in welchem die charakteristische Information betreffend die Richtung eines von dem Luftfahrzeug gesendeten Signals in Bezug auf das Bodensystem (2) gefiltert wird, und/oder einen Filterschritt, in welchem die genauere allgemeine Anflugrichtung des Luftfahrzeugs in Bezug auf den bestimmten Punkt der Landezone (4) gefiltert wird.

18. Verfahren nach einem der vorhergehenden Ansprüche, wobei das Bodensystem vier Antennen enthält.

19. Verfahren nach dem vorhergehenden Anspruch, wobei die Entfernung zwischen zwei Antennen des Bodensystems größer ist als die Hälfte der Strahlungswellenlänge einer dieser beiden Antennen.

## Claims

1. A method for assisting in the landing of an aircraft that includes an on-board system (3), on a landing zone (4) associated with a ground system (2), said ground system comprising several communication sub-modules (25) each comprising an antenna, the on-board system and the ground system being able to communicate together, the method comprising the steps of
- during a first landing phase, synchronising (602) the on-board system and the ground system by exchanging at least one item of timestamp information between the ground system and the on-board system,
- during a second landing phase, after the first landing phase:
• first point: estimating (303) for each sub-module at least one item of information characteristic of the distance separating the aircraft from the relevant sub-module, and combining (305) the information in order to infer therefrom at least one item of information characteristic of the raw general direction of arrival of the aircraft relative to a given point of the landing zone, the method being **characterized in that** it comprises the steps of :
• second point: estimating at least one item of information characteristic of the direction of a signal transmitted by the aircraft with respect to the ground system,
• third point: comparing (307) the item of information characteristic of the raw general direction of arrival of the aircraft established at the first point with at least the item of information characteristic of the direction of the second point, and determining at least one item of information characteristic of the refined general direction of arrival of the aircraft with respect to the given point in the landing zone,
• fourth point: guiding the aircraft on the basis of said item of information characteristic of the refined general direction of arrival of the aircraft with respect to the given point of the landing zone.

2. The method according to claim 1, wherein the timestamp item of information is that of a reference clock.

3. The method according to claim 2, wherein the reference clock is an atomic clock.

4. The method according to claim 3, wherein the atomic clock is coupled to at least one receiver of a satellite positioning system.

5. The method according to any one of claims 1 to 4, wherein the synchronising step is implemented by means of a "Precision Time Protocol".

6. The method according to any one of claims 1 to 5, wherein the on-board system (3) and the ground system (2) are configured to exchange data via a radio link that is compatible with an internet protocol.

7. The method according to claim 6, wherein the internet protocol is a "user datagram protocol".

8. The method according to claim 6 or claim 7, wherein the link is a control and command link.

9. The method according to any one of the preceding claims, wherein the given point in the landing zone (4) is the centre of the landing zone.

10. The method according to any one of the preceding claims, wherein the item of information characteristic of the distance separating the aircraft from each of the sub-modules is a pseudo-distance.

11. The method according to claim 10, wherein the pseudo-distance is determined by a "time difference of arrival" process.

12. The method according to any one of claims 1 to 11, wherein at the first point, the item of information is combined by multilateration.

13. The method according to any one of the preceding claims, wherein, at the second point, the item of information characteristic of the direction of a signal transmitted by the aircraft is a "direction of arrival".

14. The method according to any one of the preceding claims, wherein at the third point, the raw general direction of arrival of the aircraft is relied on to differentiate the direction of a signal transmitted by the aircraft from directions of signals transmitted by or from jammers.

15. The method according to claim 14, wherein the jammers are rejected by an anti-jamming system.

16. The method according to claim 15, wherein the anti-jamming system is an anti-jamming system with a controlled radiation datagram antenna.

17. The method according to any one of the preceding claims, including at least a step consisting in filtering the item of information characteristic of the direction of a signal transmitted by the aircraft with respect to the ground system (2) and/or a step consisting in filtering the refined general direction of arrival of the aircraft relative to the given point in the landing zone (4).

18. The method according to any one of the preceding claims, wherein the ground system comprises four antennas.

19. The method according to the preceding claim, wherein the distance separating two antennas of the ground system is greater than half the radiation wavelength of one of said two antennas.
